# FASCICULE DE BREVET EUROPEEN

(11) **EP 4 072 831 B1**
(45) Date de publication et mention de la délivrance du brevet: **13.12.2023**
(21) Numéro de dépôt: 21711301.8
(22) Date de dépôt: 22.02.2021
(51) Int. Cl.: B29C 65/08, B29C 65/74, B26D 1/01, B29K 101/12

(54) **DISPOSITIF COMPACT DE LAMINAGE/MOLETAGE PAR ULTRASONS ET DE DECOUPE D'UN ARTICLE THERMOFUSIBLE**
KOMPAKTE ULTRASCHALL-ROLL-/RÄNDELUNGS-UND SCHNEIDVORRICHTUNG FÜR HEISSSCHMELZARTIKEL
COMPACT ULTRASONIC ROLLING/KNURLING AND CUTTING DEVICE FOR A HOT-MELT ARTICLE

(30) Priorité: 09.03.2020 FR 2002294
(43) Date de publication de la demande: 19.10.2022
(73) Titulaire: Spoolex, 42230 Roche La Moliere (FR)
(72) Inventeur: LASSALLE, Luc, 42100 SAINT-ETIENNE (FR); MOUNIER, Christophe, 42230 ROCHE LA MOLIERE (FR)
(74) Mandataire: Cabinet Laurent & Charras
(86) Numéro de dépôt international: PCT/FR2021/050307
(87) Numéro de publication internationale: WO 2021/181023

(56) Documents cités:
- CN-A- 104 552 919
- FR-A1- 2 874 188
- FR-A1- 2 947 750

## Description

### Domaine technique

L'invention concerne le domaine des dispositifs d'usinage à ultrasons pour des applications diverses. L'invention concerne plus spécifiquement un dispositif de soudure par laminage ou moletage par ultrasons et de découpe d'un article thermofusible.

### Art antérieur

Il est connu de l'art antérieur un dispositif de laminage/moletage par ultrasons et découpe d'un article thermofusible, notamment sous la forme d'une bande ou nappe en matière thermofusible.

Selon le document FR2990888, un tel dispositif comprend un sabot avec, d'une part, une première partie recevant un support pivotant sur lequel est fixé un ensemble ultrasonique comprenant une sonotrode reliée à un convertisseur de fréquence et, d'autre part, une deuxième partie recevant un contre-outil positionné en alignement et en opposition avec la sonotrode et une lame de coupe.

La sonotrode positionnée au-dessus du contre-outil améliore le découpage ou le fusage de l'article thermofusible. En effet, les ultrasons générés au-dessus de l'outil permettent de réaliser un fusage localisé de l'article thermofusible ce qui améliore la qualité de la découpe et réalise une soudure sur les bords découpés. Ainsi, une découpe réalisée par ultrasons permet d'obtenir un article thermofusible avec un bord lisse.

Pour réaliser l'une de ces opérations, la sonotrode est appliquée en regard du contre-outil de sorte à exercer une pression sur l'article thermofusible. Les vibrations ultrasonores transmises à la sonotrode permettent également de réaliser un fusage localisé de l'article thermofusible de sorte à imprégner durablement l'effet du laminage ou du moletage.

Les vibrations ultrasonores de la sonotrode produisent la fusion totale ou partielle de la zone de l'article thermofusible disposé entre la sonotrode et l'enclume. Généralement le dispositif est déplacé linéairement par rapport à l'article qui est fixe ou, inversement, l'article thermofusible est déplacé par rapport au dispositif qui demeure fixe.

L'article à traiter est engagé entre la sonotrode et la molette pour réaliser l'opération de laminage et assurer la coupe dans l'axe de laminage au fur et à mesure du déplacement linéaire relatif du dispositif et de l'article avec, pour objectif, d'éviter tout effet d'effilochage.

Le moletage ou laminage en amont de la coupe, permet une soudure large de l'article, et d'éviter tout effilochage de l'article une fois coupé. Si le contre-outil présente un motif de structuration, l'opération de soudure réalisée est un moletage alors que si le contre-outil est lisse, l'opération réalisée est un laminage. Le contre-outil peut être conformé pour réaliser simultanément une soudure et une coupe. Ou bien le sabot est équipé d'une molette de soudage montée avec capacité de rotation, tandis qu'un organe de coupe est disposé en alignement linéaire avec la molette de soudage.

L'un des inconvénients de ce type de dispositif est qu'il nécessite d'être connecté à un générateur pour alimenter le convertisseur et générer les vibrations ultrasonores, rendant l'installation encombrante et contraignante.

Un autre inconvénient de ce type de dispositif est qu'il a tendance à s'échauffer, ce qui provoque des dysfonctionnements du convertisseur, dégrade la soudure, et limite aussi bien la durée d'utilisation continue du dispositif, que sa durée de vie.

Le document FR2947750 a tenté de simplifier la conception d'un dispositif de coupe et soudure par ultrasons et de remédier au problème d'encombrement en disposant un générateur électrique, un convertisseur et une sonotrode, en prolongement vertical par rapport à un support fixe.

Par ailleurs, pour remédier au problème d'échauffement, le document FR2947750 prévoit de connecter le dispositif à un système de refroidissement par air comprimé, par l'intermédiaire de tuyauterie, ce qui participe cependant à complexifier l'installation et consomme de l'énergie.

FR 2 874 188 et CN104552919 décrivent des dispositifs de l'art antérieur, notamment conforment au préambule de la revendication 1.

### Exposé de l'invention

L'un des buts de l'invention est donc de remédier les inconvénients de l'art antérieur en fournissant un dispositif de laminage/moletage et de découpe d'un article thermofusible qui soit de conception simple, facile à connecter à des métiers à tisser existants, dont l'utilisation est peu contraignante et peu encombrante, tout en ayant une consommation d'énergie réduite.

Un autre objectif de l'invention est de fournir un tel dispositif dont les dysfonctionnements du convertisseur et les dégradations de la soudure sont réduits, voire supprimés, et dont la durée d'utilisation continue et la durée de vie sont augmentées.

À cet effet, il a été mis au point un dispositif de laminage/moletage par ultrasons et de découpe d'un article thermofusible conforme à celui de l'état de la technique en ce qu'il comprend un sabot avec, d'une part, une première partie recevant un support pivotant sur lequel est fixé un ensemble ultrasonique comprenant une sonotrode reliée à un convertisseur de fréquence et, d'autre part, une deuxième partie recevant un contre-outil positionné en alignement et en opposition avec la sonotrode, et une lame de coupe.

Selon l'invention, le dispositif comprend un générateur de fréquence et un ventilateur, intégrés et fixés au support, le générateur de fréquence alimente le convertisseur de fréquence et le ventilateur, le ventilateur est destiné à souffler un flux d'air au niveau d'un point de contact entre la sonotrode et le contre-outil.

De cette manière, l'invention permet de réaliser un dispositif complet de génération de fréquence, de convertisseur de fréquence, de laminage ou de moletage d'un article thermofusible par ultrasons et de découpe dudit article, tout en limitant le poids, la consommation d'énergie et l'encombrement.

Le dispositif selon l'invention est facilement connectable électriquement notamment par une simple prise électrique alimentant le générateur. Le dispositif selon l'invention est de conception simple, il n'utilise pas d'autres types d'énergie que l'électricité.

Étant donné que le dispositif selon l'invention est compact, intégré, limité en connexion avec l'extérieur, et léger, il est alors facilement manipulable par une personne pour son installation sur des métiers à tisser.

Le dispositif selon l'invention permet aussi de réduire les énergies consommées, en n'utilisant pas d'air comprimé, tout en conservant un refroidissement correct de l'ensemble ce qui permet d'éviter toute dérive dans la soudure effectuée. Le dispositif est refroidi en continu par le ventilateur intégré, il peut travailler en continu et sa durée de vie est augmentée.

L'intégration du ventilateur permet également de supprimer toute tuyauterie pneumatique énergivore due aux pertes de charge, et qui génèrent des risques opérateurs, notamment du fait de risques de rupture de tuyauterie.

Comme indiqué, le dispositif selon l'invention est compact et permet de limiter les connectiques intermédiaires entre l'alimentation générale, le générateur de fréquence et le convertisseur, qui sont très souvent sources de pannes et sont très sensibles aux vibrations. Le dispositif est simplement alimenté par un unique câble en 24 V ou 220 V, lequel câble comprend l'alimentation, le start/stop et le retour de défauts. Dans le cas d'une alimentation en 220 V, un transformateur 220 V-24 V régulé et stabilisé est installé en amont.

Afin d'éviter au maximum la montée en température du dispositif, le ventilateur comprend une buse d'orientation du flux d'air pourvue de deux orifices de sortie, dont un premier orifice au niveau du point de contact entre la sonotrode et le contre-outil, et un deuxième orifice au niveau d'une liaison entre la sonotrode est un pavillon du convertisseur. De cette manière, le fonctionnement est optimal, les dysfonctionnements du convertisseur dus à l'échauffement sont évités.

De manière à diminuer l'encombrement, et améliorer la compacité du dispositif selon invention, le générateur de fréquence est fixé parallèlement à la deuxième partie du sabot, au-dessus du convertisseur. Dans le même but, le ventilateur est de préférence positionné face au convertisseur, à l'opposé de la première partie du sabot et dans un plan défini par le convertisseur et le générateur de fréquence.

Afin d'améliorer l'esthétique générale du dispositif, l'ensemble générateur, ensemble ultrasonique et ventilateur est logé dans un carter de protection.

Afin d'éviter davantage l'échauffement du dispositif au niveau du contact entre la sonotrode et le contre-outil, et donc d'éviter de détériorer la soudure, le dispositif comprend des moyens de réglage du parallélisme du contact entre la sonotrode et le contre-outil.

Par exemple, l'ensemble ultrasonique est monté pivotant par rapport au support dans un plan vertical orthogonal à la lame de coupe, les moyens de réglage comprennent avantageusement au moins une vis traversant le support et assujettie à une partie fixe de l'ensemble ultrasonique, et de préférence deux vis en opposition, traversant chacune le support pour venir buter contre une partie fixe de l'ensemble ultrasonique, de sorte que le vissage/dévissage d'au moins l'une des vis provoque le pivotement de l'ensemble ultrasonique dans le plan vertical orthogonal à la lame de coupe. Le caractère opposé des deux vis de réglage permet d'avoir un réglage fin et précis.

De préférence, afin d'améliorer la sécurité d'utilisation du dispositif selon l'invention, ce dernier comprend des moyens de détection de non coupe de l'article thermofusible, lesquels comprennent par exemple une tige montée sur le sabot de façon pivotante de sorte à pouvoir être poussée par l'article thermofusible non coupé, et être pivotée pour actionner un interrupteur. L'interrupteur permet par exemple d'arrêter le dispositif et/ou d'émettre un signal de non coupe.

De préférence, le dispositif comprend des moyens de réglage d'un entrefer entre la sonotrode et le contre-outil. Selon une forme de réalisation particulière, le dispositif comprend une vis épaulée traversant la première partie du sabot et assujettie à une partie fixe du support de sorte que le vissage/dévissage de la vis provoque le pivotement de support dans un plan parallèle à la lame de coupe pour modifier ledit entrefer.

### Description des figures

D'autres avantages et caractéristiques de l'invention ressortiront mieux de la description qui va suivre, donnée à titre d'exemple non limitatif, à partir des figures annexées dans lesquelles :
[Fig. 1] est une vue en perspective de côté, légèrement tourné vers l'arrière, du dispositif selon l'invention.
[Fig. 2] est une vue similaire à celle de la figure 1, le carter de protection ayant été masqué.
[Fig. 3] est une vue en perspective, trois quarts avant, dans laquelle le ventilateur, la buse et ses éléments de fixation ont été masqués.
[Fig. 4] est une vue similaire à celle de la figure 3, en perspective de trois quarts arrière.
[Fig. 5] est une vue similaire à celle de la figure 1, en détail sur le sabot et le dispositif de détection de non coupe.
[Fig. 6] est une vue similaire à celle de la figure 1, en détail sur une partie du support, laquelle a été mise en transparence.

### Description détaillée de l'invention

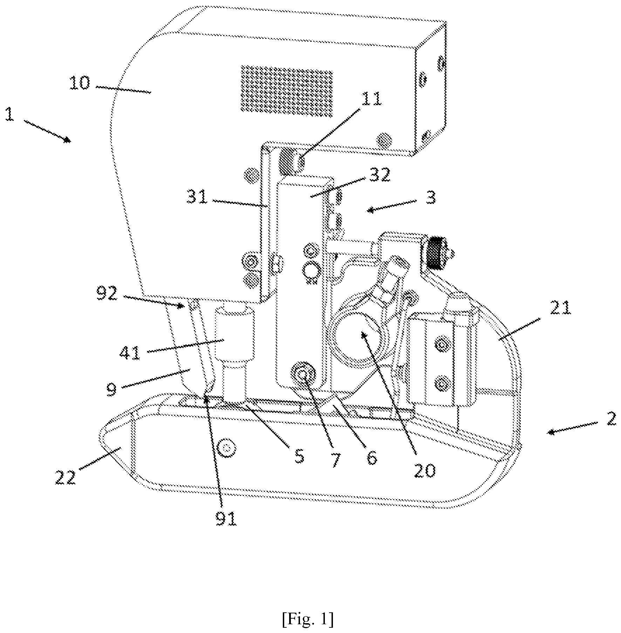

En référence aux figures 1 à 6, l'invention concerne un dispositif (1) de soudure par laminage/moletage par ultrasons et de découpe d'un article thermofusible, notamment sous la forme d'une bande ou nappe en matière thermofusible, qui est compact, léger, autonome et qui est limité en connexion avec l'extérieur pour être d'utilisation simple et économe en énergie.

Le dispositif (1) comprend un sabot (2) avec une base allongée se prolongeant par une forme en « C ». La forme en « C » du sabot (2) définit une première partie (21) recevant un support (3) pivotant sur lequel est fixé un ensemble ultrasonique (4).

La base du sabot (2), quant à elle, forme une deuxième partie (22) recevant, notamment intérieurement, un contre-outil (5) pour réaliser, en combinaison avec une sonotrode (41) des opérations de soudure, et une lame de coupe (6) de l'article thermofusible. La lame de coupe (6) est, soit combinée avec le contre-outil (5), soit disposée en alignement linéaire du contre-outil (5), et en arrière par rapport à celui-ci.

L'ensemble ultrasonique (4) fixé au support (3) comprend la sonotrode (41) positionnée en alignement et en opposition avec le contre-outil (5), laquelle sonotrode (41) est reliée à un convertisseur (42).

Plus précisément, l'ensemble ultrasonique (4) est fixé au support (3) par l'intermédiaire d'un étrier (43) enserrant le convertisseur (42), lequel étrier (43) est fixé à une plaque verticale (31), avec capacité de réglage tel qui sera décrit ci-après. La plaque (31) fait partie du support (3) et est elle-même fixée à une pièce principale (32) constituant aussi le support (3), notamment parallélépipédique rectangle reliée de manière pivotante à la première partie (21) du sabot (2) et autour d'un axe transversal (7).

D'une manière avantageuse, le dispositif (1) comprend un générateur de fréquence (8) et un ventilateur (9), intégrés et fixés au support (3). Notamment, le générateur (8) est positionné sur une plaque horizontale (33), fixée orthogonalement à la plaque (31) supportant l'ensemble ultrasonique (4). De cette manière, le générateur de fréquence (8) est fixé parallèlement à la deuxième partie (22) du sabot (2), au-dessus du convertisseur (42).

Le ventilateur (9), quant à lui, est positionné face au convertisseur (42), à l'opposé de la première partie (21) du sabot (2) et dans un plan défini par le convertisseur (42) et le générateur de fréquence (8). De cette manière, le dispositif (1) est compact et d'une largeur contenue et limitée.

Le générateur de fréquence (8) permet d'alimenter le convertisseur (42) de fréquence et de réaliser, d'une manière connue, les opérations de soudure par ultrasons. Le générateur (8) alimente également le ventilateur (9) positionné pour souffler un flux d'air au niveau d'un point de contact entre la sonotrode (41) et le contre-outil (5), pour éviter toute surchauffe.

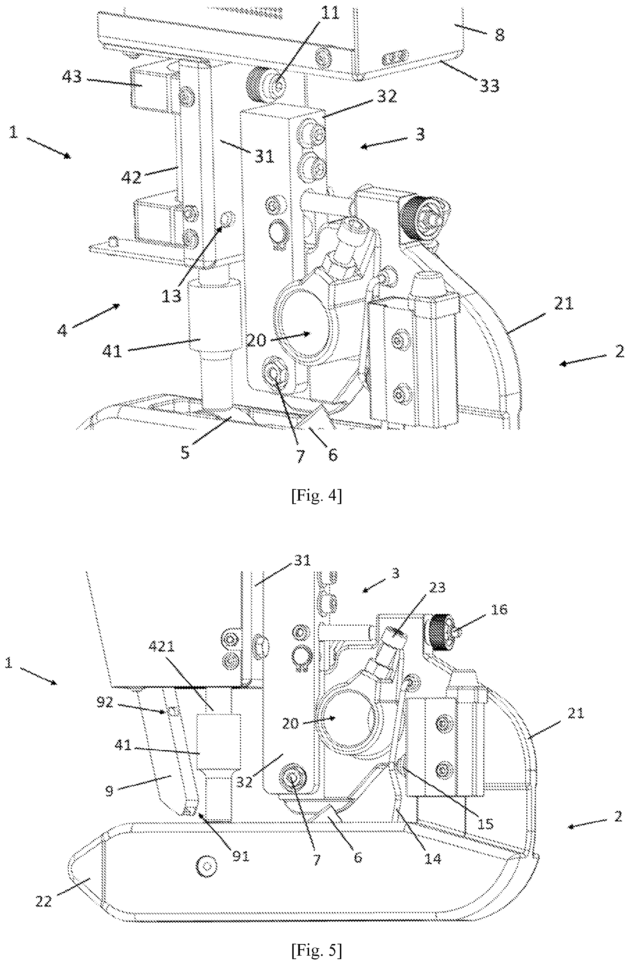

De préférence, le ventilateur (9) comprend une buse (9) d'orientation du flux d'air pourvue de deux orifices de sortie, dont un premier orifice (91) au niveau du point de contact entre la sonotrode (41) et le contre-outil (5), et un deuxième orifice (92) au niveau d'une liaison entre la sonotrode (41) et un pavillon (421) du convertisseur (42), voir figure 5, pour améliorer davantage le refroidissement. Le ventilateur (9) est fixé de toute manière appropriée, par exemple au moyen d'une plaque de fixation (34) fixée à la plaque (31) supportant l'ensemble ultrasonique (4).

Le dispositif (1) selon l'invention est donc peu encombrant, intègre directement le générateur (8) et le ventilateur (9), de sorte que ses connexions sont limitées à une simple connexion électrique pour alimenter le générateur (8).

En référence à la figure 1, un carter de protection (10) vient recouvrir l'ensemble générateur (8), ventilateur (9) et ensemble ultrasonique (4).

Afin d'éviter davantage l'échauffement lors des opérations de laminage/moletage, le dispositif (1) comprend des moyens de réglage du parallélisme du contact entre la sonotrode (41) et le contre-outil (5).

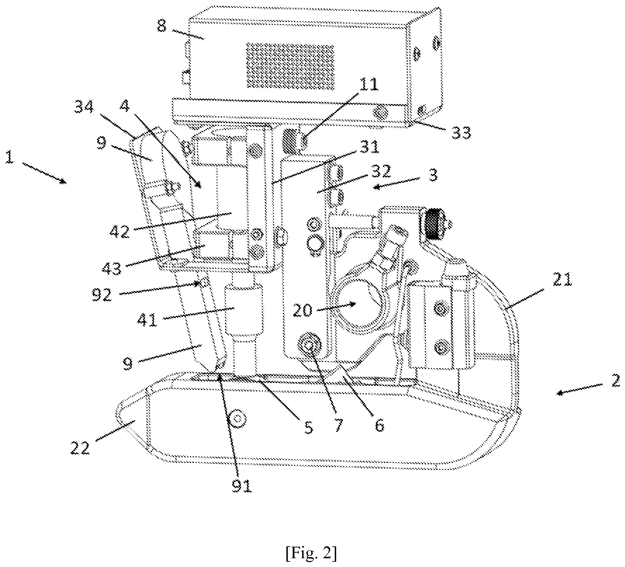

En référence à la figure 2, l'ensemble ultrasonique (4) est monté pivotant par rapport au support (3) dans un plan vertical orthogonal à la lame de coupe (6). Plus précisément, l'étrier (43) est monté pivotant autour d'une tige (11) traversant le support (3), notamment la plaque verticale (31).

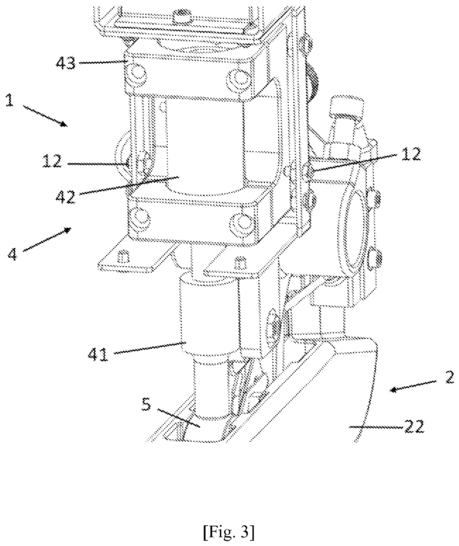

En référence à la figure 3, les moyens de réglage du parallélisme comprennent au moins une vis (12), et de préférence deux vis (12) en opposition, traversant chacune la plaque verticale (31) du support (3) pour venir en butée contre une partie fixe de l'ensemble ultrasonique (4), notamment l'étrier (43), de sorte que le vissage/dévissage de l'une des vis (12) provoque le pivotement de l'ensemble ultrasonique (4) dans le plan vertical orthogonal à la lame de coupe (6).

Le mouvement de pivotement évoqué de l'ensemble ultrasonique (4) est autorisé car ledit ensemble ultrasonique (4) est fixé à la plaque (31) du support (3) avec capacité de réglage. Notamment les orifices de la plaque (31) recevant les vis de fixation de l'étrier (43) sont plus larges que les vis elles-mêmes. En référence à la figure 4, on aperçoit notamment un orifice oblong (13) permettant le débattement latéral de l'ensemble ultrasonique (4) lors du réglage du parallélisme.

La figure 5 illustre que le dispositif (1) selon l'invention comprend des moyens de détection de non coupe de l'article thermofusible. Par exemple, ces moyens comprennent une tige (14) montée sur le sabot (2) de façon pivotante de sorte à pouvoir être poussée par l'article thermofusible non coupé, jusqu'à entraîner le pivotement de ladite tige (14) pour actionner un interrupteur d'arrêt (15) du dispositif (1) et/ou d'émission d'un signal.

De préférence, le dispositif (1) comprend également des moyens de réglage d'un entrefer entre la sonotrode (41) et le contre-outil (5). Par exemple, ces moyens de réglage sont accessibles par l'arrière du dispositif (1), et sont positionnés par rapport au support (3) de manière opposée à l'ensemble ultrasonique (4).

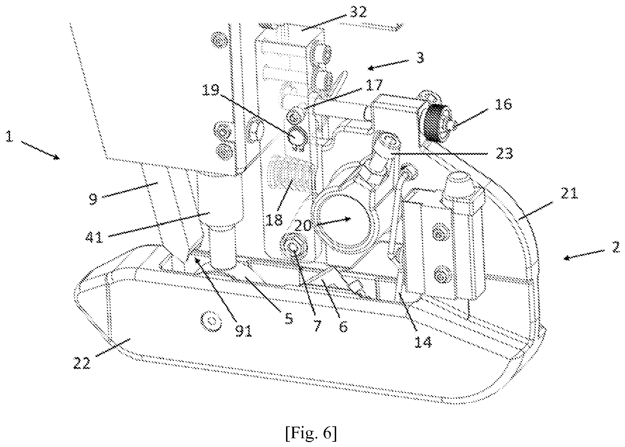

Selon une forme de réalisation particulière et en référence à la figure 6, les moyens de de réglage comprennent une vis (16) avec molette ou épaulée traversant la première partie (21) du sabot (2) et assujettie à une partie fixe du support (3). Par exemple, l'extrémité de la vis (16) pénètre dans la pièce (32) creuse et parallélépipédique rectangle constituant le support (3), et se termine par une tige (17) transversale fixée dans deux parois latérales opposées de la pièce (32) du support (3). De cette manière, lorsque la vis (16) est vissée ou dévissée, cela fait pivoter la pièce (32) support (3) qui est reliée de manière pivotante à la première partie (21) du sabot (2) autour de l'axe transversal (7), de sorte à régler l'entrefer.

Le pivotement de la pièce (32) du support (3) se fait à l'encontre d'un organe élastique (18) positionné intérieurement à ladite pièce (32) et en butée contre le sabot (2) de sorte à forcer le pivotement de ladite pièce (32) vers l'avant, pour approcher la sonotrode (41) du contre-outil (5). La position de pivotement maximale vers l'avant de la pièce support (3) est limitée par l'insertion transversale d'une goupille (19) en butée contre une portion de la première partie (21) du sabot (2).

Selon une autre caractéristique avantageuse, le sabot (2), et notamment sa première partie (21), est traversée de part en part par un orifice circulaire (20) permettant l'insertion du dispositif (1) autour d'un tube de fixation. Ceci permet la connexion mécanique sur des métiers à tisser existants. Le coulissement et l'orientation du dispositif (1) autour du tube sont bloqués par des vis de serrage (23).

Il ressort de ce qui précède que l'invention fournit bien un dispositif (1) de laminage/moletage et de découpe d'un article thermofusible, tel que par exemple une nappe, qui est de conception simple, compacte, qui consomme peu d'énergie, et qui est limité en connexion pour son alimentation. Le dispositif (1) est autonome et refroidit efficacement de sorte qu'il peut être utilisé en continu.

## Revendications

1. Dispositif (1) de laminage/moletage par ultrasons et de découpe d'un article thermofusible, le dispositif (1) comprenant un sabot (2) avec, d'une part, une première partie (21) recevant un support (3) pivotant sur lequel est fixé un ensemble ultrasonique (4) comprenant une sonotrode (41) reliée à un convertisseur (42) de fréquence et, d'autre part, une deuxième partie (22) recevant un contre-outil (5) positionné en alignement et en opposition avec la sonotrode (41) et une lame de coupe (6), **caractérisé en ce qu'**il comprend un générateur de fréquence (8) et un ventilateur (9), intégrés et fixés au support (3), le générateur de fréquence (8) alimente le convertisseur (42) de fréquence et le ventilateur (9), le ventilateur (9) étant destiné à souffler un flux d'air au niveau d'un point de contact entre la sonotrode (41) et le contre-outil (5).

2. Dispositif (1) selon la revendication 1, **caractérisé en ce que** le ventilateur (9) comprend une buse (9) d'orientation du flux d'air pourvue de deux orifices de sortie, dont un premier orifice (91) au niveau du point de contact entre la sonotrode (41) et le contre-outil (5), et un deuxième orifice (92) au niveau d'une liaison entre la sonotrode (41) et un pavillon (421) du convertisseur (42).

3. Dispositif (1) selon la revendication 1, **caractérisé en ce que** le générateur de fréquence (8) est fixé parallèlement à la deuxième partie (22) du sabot (2), au-dessus du convertisseur (42).

4. Dispositif (1) selon la revendication 1, **caractérisé en ce que** le ventilateur (9) est positionné face au convertisseur (42), à l'opposé de la première partie (21) du sabot (2) et dans un plan défini par le convertisseur (42) et le générateur de fréquence (8).

5. Dispositif (1) selon la revendication 1, **caractérisé en ce qu'**il comprend des moyens de réglage du parallélisme du contact entre la sonotrode (41) et le contre-outil (5).

6. Dispositif (1) selon la revendication 5, **caractérisé en ce que** l'ensemble ultrasonique (4) est monté pivotant par rapport au support (3) dans un plan vertical orthogonal à la lame de coupe (6), et les moyens de réglage comprennent au moins une vis (12) traversant le support (3) et assujettie à une partie fixe de l'ensemble ultrasonique (4) de sorte que le vissage/dévissage de la vis (12) provoque le pivotement de l'ensemble ultrasonique (4).

7. Dispositif (1) selon la revendication 6, **caractérisé en ce que** les moyens de réglage comprennent deux vis (12) en opposition, traversant chacune le support (3) pour venir en butée contre une partie fixe de l'ensemble ultrasonique (4) de sorte que le vissage/dévissage de l'une des vis (12) provoque le pivotement de l'ensemble ultrasonique (4) dans le plan vertical orthogonal à la lame de coupe (6).

8. Dispositif (1) selon la revendication 1, **caractérisé en ce qu'**il comprend des moyens de détection de non coupe de l'article thermofusible comprenant une tige (14) montée sur le sabot (2) de façon pivotante de sorte à pouvoir être poussée par l'article thermofusible non coupé, et pivotée pour actionner un interrupteur (15).

9. Dispositif (1) selon la revendication 1, **caractérisé en ce qu'**il comprend une vis (16) épaulée traversant la première partie (21) du sabot (2) et assujettie à une partie fixe du support (3) de sorte que le vissage/dévissage de la vis (16) provoque le pivotement du support (3) dans un plan parallèle à la lame de coupe (6) pour modifier un entrefer entre la sonotrode (41) et le contre-outil (5).

## Patentansprüche

1. Vorrichtung (1) zum Laminieren! Rändeln durch Ultraschall und zum Schneiden eines heißschmelzenden Artikels, die Vorrichtung (1) enthält einen Schuh (2) mit einerseits einem ersten Teil (21), der einen schwenkbaren Halter (3) aufnimmt, auf dem eine Ultraschall - Einheit befestigt ist, die eine Sonotrode (41) enthält, die mit einem Frequenzwandler (42) verbunden ist und andererseits einem zweiten Teil (22), der ein Gegenstück (5) aufnimmt, positioniert ausgerichtet an und gegenüber der Sonotrode (41) sowie eine Schneidklinge (6), **dadurch gekennzeichnet, dass** sie einen Frequenzgenerator (8) und einen Lüfter (9) enthält, integriert und befestigt am Halter, der Frequenzgenerator (8) versorgt den Frequenzwandler (42) und den Lüfter (9), der Lüfter (9) ist dabei dazu vorgesehen, einen Luftstrom in Höhe eines Kontaktpunktes zwischen der Sonotrode (41) und dem Gegenstück (5) einzublasen.

2. Vorrichtung (1) nach Anspruch 1, **dadurch gekennzeichnet, dass** der Lüfter (9) eine Düse (9) zur Ausrichtung des Luftstroms enthält, versehen mit zwei Auslassöffnungen, die erste Öffnung (91) in Höhe des Kontaktpunktes zwischen der Sonotrode (41) und dem Gegenstück, und eine zweite Öffnung (92) in Höhe einer Verbindung zwischen der Sonotrode (41) und einer Abdeckhaube (421) des Wandlers (42).

3. Vorrichtung (1) nach Anspruch 1, **dadurch gekennzeichnet, dass** der Frequenzgenerator (8) parallel zum zweiten Teil (22) des Schuhs (2), über dem Wandler (42) befestigt ist.

4. Vorrichtung (1) nach Anspruch 1, **dadurch gekennzeichnet, dass** der Lüfter (9) gegenüber dem Wandler (42), positioniert ist, entgegengesetzt zum ersten Teil (21) des Schuhs (2) und in einer Ebene, die vom Wandler (42) und dem Frequenzgenerator (8) definiert ist.

5. Vorrichtung (1) nach Anspruch 1, **dadurch gekennzeichnet, dass** sie Mittel zur Einstellung der Parallelität des Kontaktes zwischen der Sonotrode (41) und dem Gegenstück (5) enthält.

6. Vorrichtung (1) nach Anspruch 5, **dadurch gekennzeichnet, dass** die Ultraschall-Einheit, bezogen auf den Halter (3) in einer orthogonal vertikalen Ebene zur Schneidklinge (6) schwenkbar montiert ist und die Einstellmittel mindestens eine Schraube (12) umfassen, die durch den Halter (3) hindurchführt und von einem festen Teil der Ultraschall - Einheit (4) abhängt, so dass das Anziehen! Lösen der Schraube (12) zum Kippen der Ultraschall - Einheit (4) führt.

7. Vorrichtung (1) nach Anspruch 6, **dadurch gekennzeichnet, dass** die Einstellmittel zwei entgegengesetzte Schrauben (12) enthalten, die jede durch den Halter (3) hindurchführen, bis sie an einen festen Teil der Ultraschall - Einheit (4) stoßen, so dass das Anziehen! Lösen der Schraube (12) zum Kippen der Ultraschall - Einheit (4) in der orthogonal vertikalen Ebene zur Schneidklinge (6) führt.

8. Vorrichtung (1) nach Anspruch 1, **dadurch gekennzeichnet, dass** sie Mittel zur Erkennung einer Schneidhemmung des heißschmelzenden Artikels enthält, mit einer auf dem Schuh (2) schwenkbar montierten Stange (14), so dass sie durch den schneidgehemmten heißschmelzenden Artikel gedrückt und gekippt werden kann, um einen Schalter (15) zu betätigen.

9. Vorrichtung (1) nach Anspruch 1, **dadurch gekennzeichnet, dass** sie einen Nietbolzen (16) enthält, der durch das erste Teil (21) des Schuhs (2) hindurchführt und von einem festen Teil des Halters (3) abhängt, so dass das Anziehen! Lösen der Schraube (16) zum Kippen des Halters (3) in einer Ebene parallel zur Schneidklinge (6) führt, um einen Spalt zwischen der Sonotrode (41) und dem Gegenstück (5) zu verändern.

## Claims

1. Ultrasonic rolling/knurling and cutting device (1) for a hot-melt article, the device (1) comprising a shoe (2) with, on the one hand, a first part (21) receiving a pivoting support (3) on which is attached an ultrasonic assembly (4) comprising a sonotrode (41) connected to a frequency converter (42) and, on the other hand, a second part (22) receiving a counter-tool (5) oppositely aligned with the sonotrode (41) and a cutting blade (6), **characterised in that** it comprises a frequency generator (8) and a fan (9), rigidly attached to the support (3), the frequency generator (8) supplies the frequency converter (42) and the fan (9), the fan (9) being intended to blow out an airflow at a point of contact between the sonotrode (41) and the counter-tool (5).

2. Device (1) according to claim 1, **characterised in that** the fan (9) comprises a nozzle (9) for orienting the airflow provided with two outlet orifices, of which a first orifice (91) at the point of contact between the sonotrode (41) and the counter-tool (5), and a second orifice (92) at a connection between the sonotrode (41) and a horn (421) of the converter (42).

3. Device (1) according to claim 1, **characterised in that** the frequency generator (8) is attached parallel to the second part (22) of the shoe (2), above the converter (42).

4. Device (1) according to claim 1, **characterised in that** the fan (9) is positioned facing the converter (42), opposite the first part (21) of the shoe (2) and in a plane defined by the converter (42) and the frequency generator (8).

5. Device (1) according to claim 1, **characterised in that** it comprises means for adjusting the parallelism of the contact between the sonotrode (41) and the counter-tool (5).

6. Device (1) according to claim 5, **characterised in that** the ultrasonic assembly (4) is mounted pivoting with respect to the support (3) in a vertical plane orthogonal to the cutting blade (6), and the adjustment means comprise at least one screw (12) passing through the support (3) and subject to a fixed part of the ultrasonic assembly (4) such that the screwing/unscrewing of the screw (12) causes the pivoting of the ultrasonic assembly (4).

7. Device (1) according to claim 6, **characterised in that** the adjustment means comprise two opposite screws (12), each passing through the support (3) to abut against a stationary part of the ultrasonic assembly (4) such that the screwing/unscrewing of one of the screws (12) causes the pivoting of the ultrasonic assembly (4) in the vertical plane orthogonal to the cutting blade (6).

8. Device (1) according to claim 1, **characterised in that** it comprises non-cutting detection means for the hot-melt article comprising a rod (14) mounted on the shoe (2) pivoting so as to be able to be pushed by the uncut hot-melt article, and pivoted to actuate a switch (15).

9. Device (1) according to claim 1, **characterised in that** it comprises a shoulder screw (16) passing through the first part (21) of the shoe (2) and subject to a stationary part of the support (3) such that the screwing/unscrewing of the screw (16) causes the pivoting of the support (3) in a plane parallel to the cutting blade (6) to modify an air-gap between the sonotrode (41) and the counter-tool (5).
